# FASCICULE DE BREVET EUROPEEN

(11) **EP 1 419 930 B1**
(45) Date de publication et mention de la délivrance du brevet: **20.08.2008**
(21) Numéro de dépôt: 03356178.8
(22) Date de dépôt: 18.11.2003
(51) Int. Cl.: B60P 3/03

(54) **Dispositif de transfert de fonds sécurisé**
Vorrichtung zur sicheren Geldüberweisung
Safe funds transfer device

(30) Priorité: 18.11.2002 FR 0214392
(43) Date de publication de la demande: 19.05.2004
(73) Titulaire: Urbaco, 84320 Entraigues sur la Sorgue (FR); BRINK'S FRANCE, 75009 Paris (FR); CP Bourg SA, 94150 Rungis (FR)
(72) Inventeur: Lagarde, Patrick, 92120 Montrouge (FR); Tourneix, Joel, 77320 La Ferte Gaucher (FR); Verra, Olivier, 84000 Avignon (FR)
(74) Mandataire: Maureau, Philippe

(56) Documents cités:
- FR-A- 2 482 533
- FR-A- 2 614 012

## Description

La présente invention concerne un dispositif de transfert de fonds sécurisé.

Dans le domaine des transferts de fonds entre un local bancaire et un véhicule de transport de fonds - ci-après dénommé aussi "camion transporteur de fonds" -, les fonds sont traditionnellement acheminés manuellement par des convoyeurs armés en véhicule blindé de transport de fonds. Or, sur le chemin à parcourir à pied entre le véhicule et le local bancaire, les convoyeurs sont particulièrement vulnérables à une attaque armée de malfaiteurs.

Des dispositifs ont donc été développés qui permettent d'éliminer le trajet à pied des convoyeurs dans la rue, entre le véhicule de transport de fonds et la banque, et ainsi de respecter l'article 3 du décret du 18 décembre 2000, relatif à la sécurisation des transports de fonds, sans descente des convoyeurs du véhicule blindé de transport.

Certains dispositifs qui ont été proposés comprennent des moyens d'ouverture dans une des parois du local bancaire, permettant d'établir une communication directe entre ce dernier et le véhicule de transport de fonds, lorsque le véhicule est accolé contre la façade de la banque. Ces dispositifs supposent que le véhicule de transport de fonds emprunte le trottoir pour venir s'accoler contre la banque, ce qui est clairement indésirable pour le libre trafic des piétons.

D'autres dispositifs ont donc été proposés pour permettre une liaison sécurisée à distance entre le local bancaire et le véhicule de transport de fonds.

FR 2.482.533 propose un dispositif de transfert de fonds entre un banque et un véhicule de transport de fonds selon le préambule de la revendication 1, qui comprend une première borne d'accès dans la banque, une seconde borne d'accès située en bordure de la chaussée, reliée à la première borne par un réseau souterrain de bandes de convoyage. Depuis la borne extérieure, une goulotte télescopique permet de faire la liaison vers l'intérieur du véhicule de transport de fonds.

Ce document, bien que permettant le transfert de fonds sans exposer les convoyeurs, pose le problème de la rapidité de l'opération de transfert. En effet, les bandes transporteuses ne permettent de convoyer les fonds qu'à faible vitesse, ce qui augmente le temps global du transfert, et donc la dangerosité de cette opération. En outre, les convoyeurs ne possèdent pas de moyens directs de commande du transfert, ni de moyens de communication - notamment visuels - avec la banque à partir de la borne d'accès extérieure.

FR 2.614.012 propose un dispositif de transfert de fonds entre un véhicule blindé et un local bancaire grâce à un réseau de tubes pneumatiques souterrains reliant un accès dans la banque à une borne escamotable vers l'intérieur du véhicule. Cette borne peut être horizontale et accolable à la partie haute du véhicule, ou bien verticale et escamotable dans la chaussée pour créer un accès depuis le plancher du véhicule.

Ce document, bien que proposant un dispositif n'exposant pas les convoyeurs pendant le transfert, et permettant un transfert rapide par le moyen du réseau pneumatique, ne propose pas aux convoyeurs de moyens directs de commande du transfert, ni de moyens de communication - notamment visuels - avec la banque à partir de la borne extérieure reliée directement à la banque.

De même, FR 2.820.414 propose un dispositif de transfert de fonds entre un véhicule de transport de fonds et un local bancaire, grâce à un réseau pneumatique enterré, débouchant dans le véhicule blindé à l'aide d'une borne escamotable avec accès au niveau du plancher du véhicule blindé.

Ici encore, si ce dispositif permet d'éviter la sortie des convoyeurs hors du véhicule de transport de fonds, en limitant le temps du transfert grâce à un réseau pneumatique, il n'en reste pas moins qu'une borne escamotable dans la chaussée n'est pas hors d'eau en cas de fortes intempéries ou d'inondations, et n'est pas protégée des poussières et autres agressions extérieures.

Les principaux objectifs de la présente invention sont donc de fournir un dispositif de transfert de fonds sécurisé, permettant d'éliminer le besoin de sortie des convoyeurs hors de leur véhicule de transport de fonds, permettant un transfert rapide des fonds, permettant une communication - notamment visuelle - entre les convoyeurs et l'intérieur de la banque afin de renforcer la procédure de sécurité pendant le transfert. La présente invention vise en outre à fournir un système qui soit très peu, voire pas du tout, vulnérable aux conditions extérieures, et qui permette un transfert efficace des fonds avec un maximum de sécurité.

Ces objectifs sont atteints avec un dispositif permettant le transfert de fonds entre un véhicule et au moins un local de type local bancaire, comprenant:
(i) un terminal d'accès à l'intérieur du local,
(ii) une armoire blindée située à l'extérieur du local, à proximité de la chaussée de manière à permettre au véhicule blindé de venir s'y accoler pour mettre en regard une ouverture dudit véhicule blindé et l'armoire blindée,
(iii) un réseau pneumatique souterrain de transfert de fonds, assurant la liaison entre le terminal d'accès et l'intérieur de l'armoire blindée, ladite armoire blindée comportant un socle, un corps, une ouverture obturable par des moyens de fermeture sécurisés.

Plus particulièrement, le dispositif selon l'invention est caractérisé en ce que les moyens de fermeture sécurisés comprennent deux portes verticales pouvant pivoter vers l'intérieur du véhicule de manière à protéger latéralement l'interstice entre l'armoire et l'ouverture dudit véhicule, et en ce que l'armoire est équipée de deux bavettes horizontales rigides, mobiles horizontalement depuis l'intérieur de l'armoire en direction de l'intérieur du véhicule, de manière à protéger les interstices entre l'armoire et l'ouverture dudit véhicule, en haut et en bas de l'espace délimité par les deux portes latérales, lorsque lesdites bavettes sont déployées vers l'intérieur du véhicule.

Les portes et bavettes peuvent être ouvertes et refermées manuellement par les convoyeurs, ou bien leur ouverture / fermeture peut être motorisée. De préférence, lorsque les bavettes sont en position déployée vers l'intérieur du véhicule de transport de fonds, elles empêchent de par leur positionnement, le mouvement des portes latérales, en particulier leur fermeture, afin de constituer un sas anti-intrusion fixe.

Avantageusement, les portes et les bavettes peuvent être blindées, ce qui permet d'assurer un haut niveau de sécurité. Par blindage, on entend un traitement des matériaux constitutifs des panneaux de portes et de bavettes qui résiste aux impacts de projectiles. Le blindage peut en outre comprendre un traitement spécifique pour filtrer les émissions électromagnétiques entrant et sortant de l'armoire. Le blindage appliqué aux portes et bavettes, sera de préférence le même que celui qui est appliqué aux autres parties constitutives de l'armoire.

En outre, la hauteur des portes de l'armoire est de préférence sensiblement égale à la hauteur de l'ouverture du véhicule, et la largeur des bavettes est de préférence sensiblement égale à la largeur de l'ouverture du véhicule, aux jeux fonctionnels près. Ceci permet, une fois que le véhicule de convoyage est accolé à l'armoire et que cette dernière est ouverte, de supprimer la possibilité d'intrusion vers l'intérieur de l'armoire ou vers l'intérieur du camion, à partir de l'extérieur. Le niveau de sécurité obtenu pendant les opérations de transfert des fonds entre le camion et l'armoire, est alors optimal.

Au moins une portion des portes et des bavettes fait de préférence saillie à l'intérieur du véhicule lorsque ce dernier est accolé à l'armoire en configuration de transfert de fonds. Ceci permet de renforcer encore la sécurité du dispositif, par rapport à une configuration où les extrémités des portes et bavettes dépoyées viennent seulement au contact de la surface du véhicule de transport de fonds.

De préférence, les portes et les bavettes de l'armoire blindée sont équipées de soufflets flexibles étanches aux liquides et traitées pour filtrer les émissions électromagnétiques des équipements internes à l'armoire, situées entre lesdites portes et bavettes d'une part, et le corps de l'armoire d'autre part. Ainsi, non seulement le niveau de sécurité du dispositif est encore renforcé, mais le transfert des fonds entre le véhicule et l'armoire est réalisé dans des conditions de confort optimal puisqu'à l'abri des intempéries.

Avantageusement, le socle de l'armoire est pourvu de moyens permettant l'ajustement de la hauteur de l'ouverture de ladite armoire en fonction de la position de l'ouverture du véhicule. De préférence, lesdits moyens d'ajustement de la hauteur du corps d'armoire comprennent au moins un vérin hydraulique et/ou mécanique permettant de faire varier la hauteur du corps d'armoire par rapport au socle. Ceci permet d'adapter la configuration de fonctionnement de l'armoire au type de véhicule utilisé par les convoyeurs, et/ou au profil de la chaussée, en tenant compte par exemple d'une éventuelle pente à l'endroit où l'armoire est installée. La détection de la hauteur appropriée pourra être réalisée par exemple à l'aide de capteurs disposés sur l'armoire, pouvant détecter des repères de positionnement disposés sur le véhicule de transport de fonds, et adaptant, via un circuit électronique, la hauteur nécessaire de l'ouverture de l'armoire grâce au vérin.

De préférence, des moyens de communication audio et/ou visuelle entre les occupants du véhicule et le local, sont disposés à l'intérieur de l'armoire. Ces moyens de communications visuelle peuvent prendre la forme notamment d'au moins un interphone vidéo - ou de plusieurs interphones si l'armoire est reliée à plusieurs banques simultanément - ce qui rend la procédure de reconnaissance des convoyeurs avant et pendant le tranfert de fonds, encore plus sûre.

Le réseau pneumatique entre l'armoire et le local peut être à double sens, et comporter au moins deux tubes d'arrivée et deux tubes de départ à l'intérieur de l'armoire, et respectivement au moins deux tubes de départ et deux tubes d'arrivée dans le local. De même, le réseau pneumatique sous-terrain peut comporter des ramifications et des moyens d'aiguillage permettant de relier au moins deux locaux à une armoire blindée. On peut ainsi à partir d'une seule et même armoire, desservir un ou plusieurs locaux de clients. Dans ce dernier cas, l'armoire comprendra de préférence au moins un double jeu d'arrivées et de départs de tubes, comme décrit précédemment.

Dans tout les cas, les fonds sont transférés via le réseau pneumatique dans des cartouches rigides et/ou dans des sachets scellés et identifiés par exemple par code barre grâce à un système d'ensachage du type Sécurasac®, tel que celui décrit dans la demande de brevet français FR 02.06920. Les arrivées de tubes pneumatiques à l'intérieur de l'armoire sont situées au-dessus d'un réceptacle situé à l'intérieur de l'armoire, qui permet de réceptionner les tubes en provenance du réseau, avant que ceux-ci ne soient récupérés par les convoyeurs de fonds.

De préférence, ce réceptacle comprend au moins un portillon ouvrant en direction de l'intérieur du véhicule de transport de fonds, portillon permettant aux convoyeurs de récupérer les tubes en provenance du réseau, avant que ceux-ci ne tombent dans le sac du système d'ensachage Sécurasac®.

De préférence, l'ensemble d'arrivée des tubes dans l'armoire, comprenant éventuellement un réceptacle et un système Sécurasac® comme décrits ci-avant, est monté coulissant horizontalement sur des rails afin de permettre sa translation vers l'intérieur du camion, sur une distance suffisante (de quelques dizaines de centimètres par exemple) pour faciliter son accès par les convoyeurs situés dans le véhicule de transport de fonds. Alternativement à un système mobile en translation, on peut prévoir un ensemble d'arrivée des tubes dans l'armoire monté pivotant autour d'une charnière, de sorte qu'au moins une portion de celui-ci puisse pivoter vers l'intérieur du véhicule de transport de fonds pendant l'opération de transfert.

Dans tous les cas, la mobilité de l'ensemble de transaction peut être assurée soit manuellement, soit être motorisé et commandable au choix depuis l'intérieur de l'armoire, depuis l'intérieur du local bancaire, ou encore depuis l'intérieur du véhicule de transport de fonds.

Selon un mode de réalisation préféré de l'invention, les arrivées et départs des tubes pneumatiques à l'intérieur de l'armoire sont situés bien au-dessus du niveau du sol, ce qui permet d'éviter par exemple des infiltrations d'eau au niveau du réseau pneumatique lors d'inondations ou de fortes intempéries. Par niveau du sol, on entend le niveau du trottoir à la base de l'armoire. Par exemple, on pourra placer les ouvertures de tubes au minimum à 75 cm de la base de l'armoire.

En outre, le dispositif comporte de préférence des bornes rétractables dans la chaussée, réservant et définissant un espace à proximité de l'armoire, réservé au véhicule de transport de fonds.

Dans ce cas, la centrale de commande des bornes escamotables - ou rétractables - ou de tout système équivalent de préservation de l'espace de stationnement du véhicule de transport de fonds, peut être avantageusement située à l'intérieur de l'armoire. Néanmoins, on pourrait également prévoir de placer cette centrale de commande à l'intérieur du local bancaire, ou à l'intérieur du véhicule blindé de transport de fonds.

Selon une forme particulière d'exécution de l'invention, l'armoire peut comprendre en outre un portillon blindé de dépôt/retrait ouvrant vers l'extérieur de l'armoire, et permettant à des usagers autorisés, l'accès depuis la chaussée, à un dispositif situé à l'intérieur de l'armoire qui autorise le retrait ou le dépôt de documents respectivement depuis, ou vers, le local bancaire via l'armoire de transfert et le réseau pneumatique. Il est entendu que l'armoire peut contenir autant de dispositifs que d'établissements desservis, ou alternativement, peut ne contenir qu'un seul dispositif avec un réseau d'aiguillage permettant l'acheminement correct des documents transférés entre l'armoire et les différents établissements desservis. L'autorisation des usagers a lieu par exemple par validation d'un code secret, à l'instar des autorisations utilisées pour le retrait d'espèces dans des distributeuirs automatiques de billets.

Enfin, au moins une portion de l'armoire peut comporter des moyens d'affichage d'informations et/ou de publicité.

De toute façon l'invention sera bien comprise, à l'aide de la description qui suit, en référence au dessin schématique annexé représentant, à titre d'exemple non limitatif, une forme d'exécution d'un dispositif de transfert de fonds selon l'invention.

Figure 1 en est une vue générale schématique de profil, montrant le local, l'armoire, reliés par le réseau de tubes pneumatiques, et le véhicule de transport de fonds.

Figure 2 en est une vue en perspective de face, montrant l'armoire fermée, et le véhicule accolé à celle-ci.

Figure 3 en est une vue en perspective de face, montrant l'armoire ouverte et le véhicule accolé à celle-ci.

Figure 4 en est une vue en coupe de profil, montrant l'armoire en position fermée, munie de tubes pneumatiques pour un transfert de fonds dans un sens.

Figure 5 en est une vue en coupe de profil, montrant l'armoire en position ouverte, munie de tubes pneumatiques pour un transfert de fonds à double sens.

Figure 6 en est une vue en coupe de dessus, montrant l'armoire en position ouverte, munie de tubes pneumatiques pour transfert de fonds dans un seul sens.

Figure 7 en est une vue en coupe de dessus, montrant l'armoire en position ouverte, munie de tubes pneumatiques pour transfert de fonds à double sens.

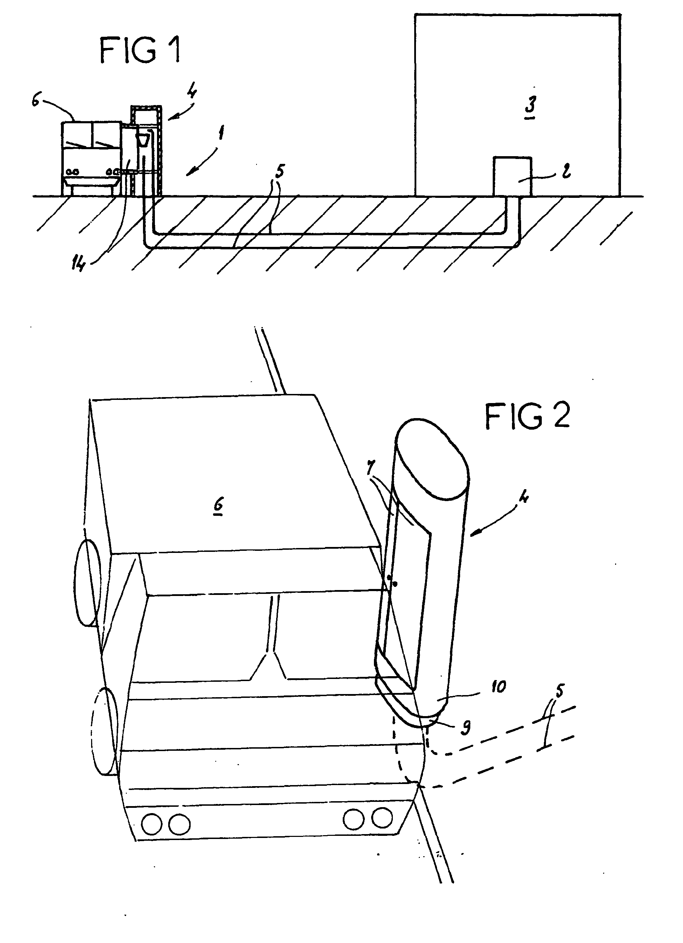

La figure 1 montre un dispositif 1 de transfert de fonds selon l'invention, comportant un terminal d'accès 2 à l'intérieur d'un local 3, de type local bancaire, une armoire blindée 4, et un réseau de tubes pneumatiques 5 reliant le terminal d'accès 2 du local et l'armoire 4. L'armoire 4 est disposée sur le trottoir à proximité de la chaussée, de sorte qu'un véhicule blindé 6 de transport de fonds puisse venir s'accoler à l'armoire 4, comme cela est illustré aux figures 1, 2 et 3. Ce dernier comporte une ouverture latérale (non représentée au dessin), par exemple latérale qui doit être en regard des portes 7 de l'armoire 4 au moment de l'ouverture de cette dernière pour pouvoir procéder au transfert de fonds.

Le terminal d'accès 2 situé dans le local 3 peut être de toute forme adaptée à l'envoi et à la réception d'objets par l'intermédiaire du réseau 5 de tubes pneumatiques. Ce terminal d'accès 2 possède en outre des moyens permettant la communication avec les convoyeurs de fonds présents dans le véhicule 6, grâce à des moyens similaires présents dans l'armoire 4. Ces moyens peuvent être par exemple un système d'interphonie, sonore et éventuellement visuelle (non représentée au dessin).

Le réseau pneumatique 5 utilisé est souterrain, comme cela est représenté à la figure 1, de manière à être inviolable depuis la rue. Ce réseau 5 comprend des tubes rigides et/ou souples selon la configuration du réseau. De tels réseaux pneumatiques sont connus et utilisés dans de nombreux domaines, et ne feront donc pas l'objet d'une description détaillée dans le cadre de la présente description.

Ce réseau pneumatique 5, tel que représenté à la figure 1 est un réseau permettant un transfert de fonds à double sens, donc il comporte deux tubes, l'un permettant le transfert depuis l'armoire 4 vers le local 3, et l'autre en sens inverse.

L'armoire 4 selon la présente invention comporte un socle 9, un corps 10, et au moins une ouverture faisant face à la chaussée, et en regard de laquelle le chauffeur du véhicule blindé 6 vient positionner l'ouverture dudit véhicule, comme cela est représenté à la figure 2. L'armoire 4 comporte en outre deux portes 7 permettant de donner accès ou condamner l'accès à l'intérieur de ladite armoire 4. Optionnellement, l'armoire peut comprendre plusieurs compartiments, par exemple pour séparer l'équipement de fonctionnement du dispositif situé dans l'armoire, de l'espace utilisé par les convoyeurs pour communiquer avec le local et transmettre des fonds.

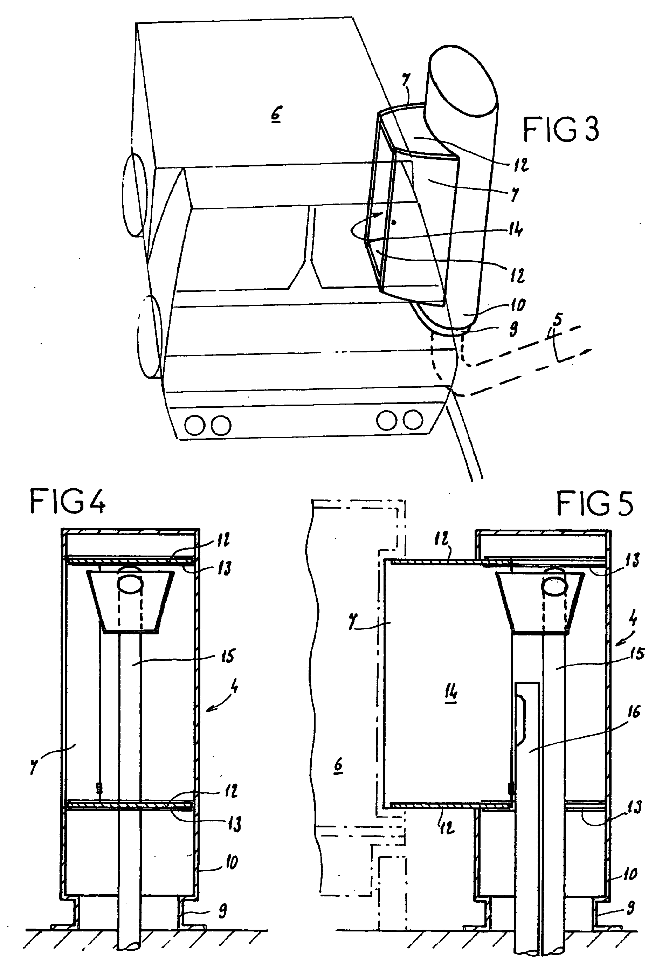

Enfin, comme cela est représenté aux figures 4 à 7, l'armoire 4 est équipée de deux bavettes 12 rigides montées par exemple sur des glissières 13, et mobiles en coulissement horizontal grâce à des crémaillères et des roues dentées motorisées (non représentées). Alternativement, la mobilité des bavettes 12 peut être obtenue par un jeu de vérins équilibreurs ou de vérins motorisés.

Comme représenté à la figure 2, l'armoire 4 en position fermée ne permet pas l'accès au réseau pneumatique 5, ni à quelque moyen de communication que ce soit avec l'intérieur du local bancaire 3.

Après que le véhicule 6 a été disposé convenablement en regard de l'armoire 4, et la hauteur de l'ouverture de ladite armoire 4 a été éventuellement adaptée grâce aux moyens décrits en préambule, une procédure de reconnaissance sécurisée est engagée entre le local bancaire 3 et les convoyeurs présents dans le véhicule blindé 6. Les détails de cette procédure ne font pas l'objet de la présente invention et ne seront donc pas décrits plus avant. A l'issue de cette procédure, l'ouverture du véhicule blindé 6 est réalisée, simultanément à l'ouverture des portes 7 de l'armoire 4, qui pivotent vers l'intérieur du véhicule afin d'obturer les interstices latéraux entre l'armoire et le véhicule.

Enfin, les bavettes 12 escamotables décrites ci-dessus, viennent obturer les interstices entre l'armoire 4 et le véhicule 6, qui sont présentés en haut et en bas de l'espace délimité entre les portes 7. On obtient ainsi un sas 14 sécurisé entre l'armoire 4 et le véhicule 6, comme cela est représenté à la figure 3.

Comme cela est représenté à la figure 5, les extrémités des portes 7 et des bavettes 12 font légèrement saillie à l'intérieur du véhicule blindé 6, de manière à assurer une obturation la plus complète possible des interstices entre l'armoire et le véhicule de transport de fonds. Ceci permet d'empêcher au maximum l'intrusion d'un bras armé vers l'intérieur du véhicule.

Le transfert de fonds est réalisé par les convoyeurs depuis l'armoire 4, grâce aux tubes du réseau pneumatique 5 dont les extrémités débouchent à l'intérieur de l'armoire 4.

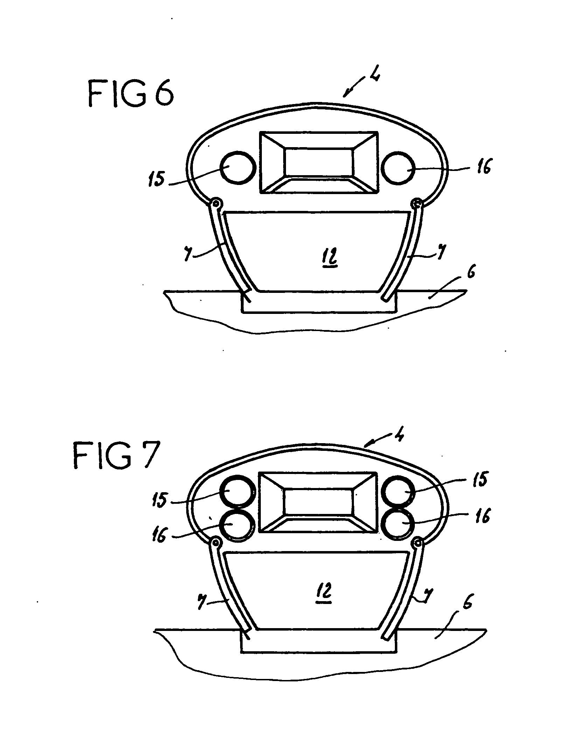

Comme cela est représenté aux figures 4 et 6, le réseau 5 peut être simple, dans ce cas, les convoyeurs reçoivent des fonds depuis le local 3, qui sont acheminés à travers le réseau 5 pneumatique, et sont expulsés dans un panier situé dans l'armoire 4. Le passage en sens inverse est possible à l'aide d'un second tube, comme cela est représenté à la figure 6, qui permet d'envoyer des fonds depuis l'armoire 4 vers le local 3.

Selon une alternative de la présente invention représentée aux figures 5 et 7, le réseau 5 peut comprendre deux tubes d'arrivée 15 et deux tubes de départ 16 dans l'armoire 4. Ce dispositif permet par exemple de correspondre depuis l'armoire 4 avec plus d'un local 3 bancaire, grâce à un jeu d'aiguillages (non représenté au dessin).

Tout en ayant essayé, dans la description qui précède, d'attirer l'attention sur les caractéristiques de l'invention jugées revêtir une importance particulière, il faut noter que l'invention ne se limite pas au mode de réalisation décrit ci-avant, mais qu'elle en embrasse au contraire toutes les variantes. C'est ainsi, notamment que les dimensions de l'armoire et des tubes du réseau pneumatique peuvent varier en fonction des objets à transporter.

## Revendications

1. Dispositif (1) permettant le transfert de fonds entre un véhicule blindé (6) et au moins un local (3) de type local bancaire, comprenant:
(i) un terminal d'accès (2) à l'intérieur du local (3),
(ii) une armoire blindée (4) située à l'extérieur du local (3), à proximité de la chaussée de manière à permettre au véhicule blindé (6) de venir s'y accoler pour mettre en regard une ouverture dudit véhicule blindé et l'armoire blindée,
(iii) un réseau (5) souterrain de transfert de fonds, assurant la liaison entre le terminal d'accès (2) et l'intérieur de l'armoire (4) blindée,
ladite armoire (4) blindée comportant un socle (9), un corps (10), une ouverture obturable par des moyens de fermeture sécurisés,
le réseau est un réseau pneumatique (5) et que
**caractérisé en ce que** les moyens de fermeture sécurisés comprennent deux portes verticales (7) pouvant pivoter vers l'intérieur du véhicule (6) de manière à protéger latéralement l'interstice entre l'armoire (4) et l'ouverture dudit véhicule (6), et **en ce que** l'armoire (4) est équipée de deux bavettes (12) horizontales rigides, mobiles horizontalement depuis l'intérieur de l'armoire (4) en direction de l'intérieur du véhicule (6), de manière à protéger les interstices entre l'armoire (4) et l'ouverture dudit véhicule (6), en haut et en bas de l'espace délimité par les deux portes (7) latérales, lorsque lesdites bavettes (12) sont déployées vers l'intérieur du véhicule.

2. Dispositif selon la revendication 1, **caractérisé en ce que** les bavettes déployées empêchent le mouvement des portes latérales, en particulier leur fermeture.

3. Dispositif (1) selon les revendications 1 ou 2, **caractérisé en ce que** les portes (7) et les bavettes (12) sont blindées.

4. Dispositif (1) selon l'une quelconque des revendications 1 à 3, **caractérisé en ce que** la hauteur des portes (7) de l'armoire (4) est sensiblement égale à la hauteur de l'ouverture du véhicule (6), et la largeur des bavettes (12) est sensiblement égale à la largeur de l'ouverture du véhicule (6), aux jeux fonctionnels près.

5. Dispositif (1) selon l'une quelconque des revendications 1 à 4, **caractérisé en ce qu'**au moins une portion des portes (7) et des bavettes (12) fait saillie à l'intérieur du véhicule (6) lorsque ce dernier est accolé à l'armoire (4) en configuration de transfert de fonds.

6. Dispositif (1) selon l'une quelconque des revendications 1 à 5, **caractérisée en ce que** les portes (7) et les bavettes (12) de l'armoire (4) blindée sont équipées de soufflets flexibles étanches aux liquides et traitées pour filtrer les émissions électromagnétiques des équipements internes à l'armoire (4), situées entre lesdites portes (7) et bavettes (12) d'une part, et le corps (10) de l'armoire (4) d'autre part.

7. Dispositif (1) selon l'une quelconque des revendications 1 à 6, **caractérisé en ce que** le socle (9) de l'armoire (4) est pourvu de moyens permettant l'ajustement de la hauteur de l'ouverture de ladite armoire (4) en fonction de la position de l'ouverture du véhicule (6) blindé.

8. Dispositif (1) selon la revendication 7, **caractérisé en ce que** lesdits moyens d'ajustement de la hauteur du corps (10) d'armoire (4) comprennent au moins un vérin hydraulique et/ou mécanique permettant de faire varier la hauteur du corps (10) d'armoire (4) par rapport au socle (9).

9. Dispositif (1) selon l'une quelconque des revendications 1 à 8, **caractérisé en ce que** des moyens de communication visuelle entre les occupants du véhicule (6) et le local (3), sont disposés à l'intérieur de l'armoire (4).

10. . Dispositif (1) selon l'une quelconque des revendications 1 à 9, **caractérisé en ce que** le réseau pneumatique entre l'armoire (4) et le local (3) est à double sens, et comporte au moins un tube d'arrivée (15) et un tube de départ (16) à l'intérieur de l'armoire (4), et respectivement au moins un tube de départ (16) et un tube d'arrivée (15) dans le local (3).

11. Dispositif (1) selon l'une quelconque des revendications 1 à 10, **caractérisé en ce que** le réseau pneumatique souterrain comporte des ramifications et des moyens d'aiguillage permettant de relier au moins deux locaux à une même armoire (4) blindée.

12. Dispositif (1) selon les revendications 1 à 11 **caractérisé en ce que** l'ensemble composé du système d'arrivée des tubes du réseau pneumatique dans l'armoire, est monté coulissant horizontalement sur des rails afin de permettre sa translation vers l'intérieur du véhicule de transport de fonds, sur une distance suffisante pour faciliter son accès par les convoyeurs situés dans le véhicule de transport de fonds.

13. Dispositif (1) selon les revendications 1 à 11 **caractérisé en ce que** l'ensemble composé du système d'arrivée des tubes du réseau pneumatique dans l'armoire, est monté pivotant autour d'une charnière, de sorte qu'au moins une portion de celui-ci puisse pivoter vers l'intérieur du véhicule de transport de fonds pendant l'opération de transfert.

14. Dispositif selon l'une quelconque des revendications 1 à 13, **caractérisé en ce que** les ouvertures des tubes du réseau pneumatique à l'intérieur de l'armoire, sont situées au-dessus du niveau du sol à la base de l'armoire.

15. Dispositif (1) selon l'une quelconque des revendications 1 à **14, caractérisé en ce qu'**il comporte en outre des bornes rétractables dans la chaussée, définissant un espace à proximité de l'armoire (4), réservé au véhicule (6) de transport de fonds.

16. Dispositif (1) selon la revendication 15, **caractérisé en ce qu'**il comprend une centrale de commande des bornes rétractables, située à l'intérieur de l'armoire.

17. Dispositif (1) selon l'une quelconque des revendications 1 à 16, **caractérisé en ce qu'**au moins une portion de l'armoire (4) comporte des moyens d'affichage d'informations et/ou de publicité.

## Claims

1. A device (1) allowing the transfer of funds between an armored vehicle (6) and at least one site (3) of the bank site type, comprising:
(i) an access terminal (2) inside the site (3),
(ii) an armored cabinet (4) located outside the site (3), near the roadway so as to allow an armored vehicle (6) to pull alongside it to place an opening of said armored vehicle and said armored cabinet across from each other,
(iii) an underground funds transfer network (5), providing the connection between the access terminal (2) and the inside of the armored cabinet (4),
said armored cabinet (4) comprising a base (9), a body (10), an opening able to be closed by secure closing means,
**characterized in that** the network is a pneumatic network (5) and **in that** the secure closing means comprise two vertical doors (7) able to pivot toward the inside of the vehicle (6) so as to laterally protect the gap between the cabinet (4) and the opening of said vehicle (6), and **in that** the cabinet (4) is provided with two rigid horizontal plates (12), horizontally mobile from the inside of the cabinet (4) in the direction of the inside of the vehicle (6), so as to protect the gaps between the cabinet (4) and the opening of said vehicle (6), at the top and the bottom of the space defined by the two side doors (7), when said plates (12) are deployed toward the inside of the vehicle.

2. The device according to claim 1, **characterized in that** the deployed plates prevent the movement of the side doors, in particular their closing.

3. The device according to claims 1 or 2, **characterized in that** the doors (7) and the plates (12) are armored.

4. The device (1) according to any one of claims 1 to 3, **characterized in that** the height of the doors (7) of the cabinet (4) is substantially equal to the height of the opening of the vehicle (6), and the width of the plates (12) is substantially equal to the width of the opening of the vehicle (6), with close running clearances.

5. The device (1) according to any one of claims 1 to 4, **characterized in that** at least one portion of the doors (7) and the plates (12) protrudes inside the vehicle (6) when said vehicle is alongside the cabinet (4) in the funds transfer configuration.

6. The device (1) according to any one of claims 1 to 5, **characterized in that** the doors (7) and the plates (12) of the armored cabinet (4) are provided with flexible bellows sealing against liquids and treated to filter the electromagnetic emissions of equipment inside the cabinet (4) located between said doors (7) and plates (12) on one hand, and the body (10) of the cabinet (4) on the other.

7. The device (1) according to any one of claims 1 to 6, **characterized in that** the base (9) of the cabinet (4) is provided with means making it possible to adjust the height of the opening of said cabinet (4) according to the position of the opening of the armored vehicle (6).

8. The device (1) according to claim 7, **characterized in that** said means for adjusting the height of the body (10) of the cabinet (4) comprise at least one hydraulic and/or mechanical cylinder making it possible to vary the height of the body (10) of the cabinet (4) in relation to the base (9).

9. The device (1) according to any one of claims 1 to 8, **characterized in that** visual communication means between the occupants of the vehicle (6) and the site (3) are arranged inside the cabinet (4).

10. The device (1) according to any one of claims 1 to 9, **characterized in that** the pneumatic network between the cabinet (4) and the site (3) is bidirectional, and comprises at least one incoming tube (15) and one outgoing tube (16) inside the cabinet (4), and one outgoing tube (16) and one incoming tube (15) in the site (3), respectively.

11. The device (1) according to any one of claims 1 to 10, **characterized in that** the underground pneumatic network comprises ramifications and switching means making it possible to connect at least two sites to a same armored cabinet (4).

12. The device (1) according to claims 1 to 11, **characterized in that** the assembly made up of the incoming tube system of the pneumatic network in the cabinet, is mounted sliding horizontally on rails in order to enable its translation toward the inside of the funds transport vehicle, over a sufficient distance to facilitate its access by the conveyors located in the funds transport vehicle.

13. The device (1) according to claims 1 to 11, **characterized in that** the assembly made up of the incoming tube system of the pneumatic network in the cabinet is mounted pivoting around a hinge, such that at least one portion thereof can pivot toward the inside of the funds transport vehicle during the transfer operation.

14. The device according to any one of claims 1 to 13, **characterized in that** the openings of the tubes of the pneumatic network inside the cabinet are located above ground level at the base of the cabinet.

15. The device (1) according to any one of claims 1 to 14, **characterized in that** it also comprises retractable bollards in the roadway, defining a space near the cabinet (4), reserved for the funds transport vehicle (6).

16. The device (1) according to claim 15, **characterized in that** it comprises a control center for the retractable bollards, located inside the cabinet.

17. The device (1) according to any one of claims 1 to 16, **characterized in that** at least one portion of the cabinet (4) comprises means for displaying information and/or advertisements.

## Patentansprüche

1. Vorrichtung (1) zum Transfer von Geld zwischen einem gepanzerten Fahrzeug (6) und mindestens einer Räumlichkeit (3) vom Typ eines Bankraums, umfassend:
(i) ein Zugangsterminal (2) in der Räumlichkeit (3),
(ii) einen Panzerschrank (4) außerhalb der Räumlichkeit (3) in der Nähe der Straße, um dem gepanzerten Fahrzeug (6) zu ermöglichen, dort anzudocken, um eine Öffnung des gepanzerten Fahrzeugs und des Panzerschranks gegenüber zu positionieren,
(iii) ein unterirdisches Netz (5) zum Geldtransfer, das die Verbindung zwischen dem Zugangsterminal (2) und dem Innern des Panzerschranks (4) gewährleistet,
wobei der Panzerschrank (4) einen Sockel (9), einen Körper (10), eine mit abgesicherten Verschlussmitteln verschließbare Öffnung umfasst,
das Netz ein pneumatisches Netz (5) ist,
**dadurch gekennzeichnet, dass** die abgesicherten Verschlussmittel zwei vertikale Türen (7) umfassen, die in Richtung Innenraum des Fahrzeugs (6) schwingen, so dass der Spalt zwischen dem Schrank (4) und der Öffnung des Fahrzeugs (6) seitlich geschützt ist, und **dadurch**, dass der Schrank (4) mit zwei horizontalen starren Klappen (12) ausgestattet ist, die vom Innern des Schranks (4) aus horizontal in Richtung Innenraum des Fahrzeugs (6) bewegbar sind, um den Spalt zwischen dem Schrank (4) und der Öffnung des Fahrzeugs (6) im oberen und unteren Bereich, der von den zwei seitlichen Türen (7) begrenzt wird, zu schützen, wenn die Klappen (12) in Richtung Innenraum des Fahrzeugs ausgeklappt sind.

2. Vorrichtung nach Anspruch 1, **dadurch gekennzeichnet, dass** die ausgeklappten Klappen die Bewegung der seitlichen Türen verhindern, vor allem ihr Schließen.

3. Vorrichtung (1) nach Anspruch 1 oder 2, **dadurch gekennzeichnet, dass** die Türen (7) und die Klappen (12) gepanzert sind.

4. Vorrichtung (1) nach einem der Ansprüche 1 bis 3, **dadurch gekennzeichnet, dass** die Höhe der Türen (7) des Schranks (4) etwa gleich der Höhe der Öffnung des Fahrzeugs (6) ist, und die Breite der Klappen (12) etwa gleich der Breite der Öffnung des Fahrzeugs (6) ist, bis auf die Funktionsspiele.

5. Vorrichtung (1) nach einem der Ansprüche 1 bis 4, **dadurch gekennzeichnet, dass** mindestens ein Abschnitt der Türen (7) und der Klappen (12) in den Innenraum des Fahrzeugs (6) hineinragt, wenn dieses am Schrank (4) in Konfiguration Geldtransfer angedockt ist.

6. Vorrichtung (1) nach einem der Ansprüche 1 bis 5, **dadurch gekennzeichnet, dass** die Türen (7) und die Klappen (12) des Panzerschranks (4) mit für Flüssigkeiten undurchlässigen flexiblen Faltenbälgen ausgestattet sind, die behandelt wurden, um die elektromagnetischen Emissionen der internen Ausrüstungen im Schrank (4) zu filtern und die sich zwischen den Türen (7) und Klappen (12) einerseits und dem Körper (10) des Schranks (4) andererseits befinden.

7. Vorrichtung (1) nach einem der Ansprüche 1 bis 6, **dadurch gekennzeichnet, dass** der Sockel (9) des Schranks (4) mit Mitteln versehen ist, die das Anpassen der Höhe der Öffnung des Schranks (4) in Abhängigkeit von der Position der Öffnung des gepanzerten Fahrzeugs (6) erlauben.

8. Vorrichtung (1) nach Anspruch 7, **dadurch gekennzeichnet, dass** die Mittel zum Anpassen der Höhe des Körpers (10) des Schranks (4) mindestens einen hydraulischen und/oder mechanischen Zylinder umfassen, der es erlaubt, die Höhe des Körpers (10) des Schranks (4) im Verhältnis zum Sockel (9) zu variieren.

9. Vorrichtung (1) nach einem der Ansprüche 1 bis 8, **dadurch gekennzeichnet, dass** im Schrank (4) Mittel zur visuellen Kommunikation zwischen den Insassen des Fahrzeugs (6) und der Räumlichkeit (3) angeordnet sind.

10. Vorrichtung (1) nach einem der Ansprüche 1 bis 9, **dadurch gekennzeichnet, dass** das pneumatische Netz zwischen dem Schrank (4) und der Räumlichkeit (3) in zwei Richtungen ist und mindestens ein Eingangsrohr (15) und ein Abgangsrohr (16) im Schrank (4) umfasst und jeweils mindestens ein Abgangsrohr (16) und ein Eingangsrohr (15) in der Räumlichkeit (3).

11. Vorrichtung (1) nach einem der Ansprüche 1 bis 10, **dadurch gekennzeichnet, dass** das unterirdische pneumatische Netz Verzweigungen umfasst und Stellmittel, die es erlauben, mindestens zwei Räumlichkeiten mit demselben Panzerschrank (4) zu verbinden.

12. Vorrichtung (1) nach den Ansprüchen 1 bis 11, **dadurch gekennzeichnet, dass** der vom Eingangssystem der Rohre des pneumatischen Netzes im Schrank gebildete Komplex horizontal gleitend auf Schienen montiert ist, um seine Verschiebung nach innen in den Geldtransporter zu erlauben über eine Distanz, die ausreichend ist, um seine Erreichbarkeit durch Fördereinrichtungen, die sich im Geldtransporter befinden, zu erlauben.

13. Vorrichtung (1) nach den Ansprüche 1 bis 11, **dadurch gekennzeichnet, dass** der vom Eingangssystem der Rohre des pneumatischen Netzes im Schrank gebildete Komplex um ein Scharnier schwenkbar montiert ist, so dass mindestens ein Abschnitt von ihm in das Innere des Geldtransporters schwenkbar ist und damit die Transferoperation erlaubt.

14. Vorrichtung nach einem der Ansprüche 1 bis 13, **dadurch gekennzeichnet, dass** die sich Öffnungen der Rohre des pneumatischen Netzes im Schrank oberhalb der Bodenebene an der Basis des Schranks befinden.

15. Vorrichtung (1) nach einem der Ansprüche 1 bis 14, **dadurch gekennzeichnet, dass** sie im weiteren in die Straße versenkbare Pfosten umfasst, die einen Raum in der Nähe des Schranks (4) definieren, der für den Geldtransporter (6) reserviert ist.

16. Vorrichtung (1) nach Anspruch 15, **dadurch gekennzeichnet, dass** sie eine Steuerzentrale für die versenkbaren Pfosten umfasst, die sich im Schrank befindet.

17. Vorrichtung (1) nach einem der Ansprüche 1 bis 16, **dadurch gekennzeichnet, dass** mindestens ein Abschnitt des Schranks (4) Mittel zur Anzeige von Informationen und/oder von Werbung umfasst.
